# EUROPÄISCHE PATENTSCHRIFT

(11) **EP 1 893 419 B1**
(45) Veröffentlichungstag und Bekanntmachung des Hinweises auf die Patenterteilung: **12.08.2015**
(21) Anmeldenummer: 06754170.6
(22) Anmeldetag: 07.06.2006
(51) Int. Cl.: B60B 39/00

(54) **GLEITSCHUTZVORRICHTUNG**
ANTI-SKID DEVICE
DISPOSITIF ANTIDERAPANT

(30) Priorität: 21.06.2005 DE 102005029664
(43) Veröffentlichungstag der Anmeldung: 05.03.2008
(73) Patentinhaber: RUD Ketten Rieger & Dietz GmbH u. Co. KG, 73432 Aalen-Unterkochen (DE)
(72) Erfinder: RIEGER, Hansjörg, 73431 Aalen (DE); HOFMANN, Peter, 73432 Aalen-Unterkochen (DE); BIEHLER, Wolfgang, 73431 Aalen (DE)
(74) Vertreter: Grünecker Patent- und Rechtsanwälte PartG mbB
(86) Internationale Anmeldenummer: PCT/EP2006/005402
(87) Internationale Veröffentlichungsnummer: WO 2006/136286

(56) Entgegenhaltungen:
- EP-A- 0 278 896
- EP-A- 1 049 591
- DE-U1- 29 815 979

## Beschreibung

### Technisches Gebiet

Die Erfindung betrifft eine Gleitschutzvorrichtung mit mehreren an einem drehbaren Halter befestigten Kettensträngen, deren dem Halter abgewandte Abschnitte in der Betriebsstellung vom sich drehenden Halter unter Fliehkrafteinwirkung in den Bereich der Bodenberührungsfläche eines rotierenden Fahrzeugrades geschleudert werden, mit einem Schwenkaggregat für einen den Halter tragenden Auslegerarm und mit Mitteln zum Einleiten gegenläufiger Schwenkbewegungen in das Schwenkaggregat, durch die der Auslegerarm aus einer Ruhestellung in seine Betriebsstellung und zurück bewegbar ist, wobei die Mittel zum Einleiten der Schwenkbewegungen in das Schwenkaggregat von einer Antriebseinheit mit einem in einem Druckluftzylinder geführten Kolben gebildet werden, durch die unter Zwischenschaltung eines von einer ein Frontglied und ein Endglied aufweisenden Schubkette gebildeten Übertragungselementes Schwenkbewegungen in ein mit dem Frontglied verbundenes Antriebsrad oder Antriebsritzel einleitbar sind, dessen in einem Gehäuse gelagerte Welle den Auslegerarm für den Halter trägt.

### Stand der Technik

Eine Gleitschutzvorrichtung der vorstehenden Art ist in der EP 1 049 591 B1 als eine zeichnerisch nicht dargestellte alternative Ausführungsform zu einer Konstruktion beschrieben, bei der das aus einem beidseits des Kolbens mit Druckluft beaufschlagbaren Zylinder herausragende Ende einer Kolbenstange mit einem eine geschlossene Schlaufe bildenden Kettenstrang verbunden ist, dessen Glieder ein Antriebsrad oder Antriebsritzel und ein unverzahntes Umlenkrad passieren. Durch den Austausch der geschlossenen Kettenschlaufe gegen eine Schubkette kann auf das Umlenkrad verzichtet werden.

Bekannt ist außerdem und zwar aus der EP 0 278 896 B1 eine ähnlich aufgebaute Gleitschutzvorrichtung, bei der ein Abschnitt der Kolbenstange des in einem beidseits mit Druckluft beaufschlagbaren Zylinder geführten Kolbens als mit einem Antriebsritzel kämmende Zahnstange ausgebildet ist.

Bei beiden bekannten Gleitschutzvorrichtungen dient zur Aufnahme des Antriebsrades bzw. Antriebsritzels für das Schwenkaggregat ein mit dem Druckluftzylinder verbundenes Gehäuse, dessen Baulänge zwangsläufig größer als der Hub des mit Druckluft beaufschlagbaren Kolbens ist.

### Darstellung der Erfindung

Im Hinblick darauf, dass der für die Unterbringung einschlägiger Gleitschutzvorrichtungen bei Fahrzeugen zur Verfügung stehende Raum vergleichsweise gering ist, besteht ein dringendes Bedürfnis nach einer kompakten Bauweise. Aufgabe der Erfindung ist es, diesem dringenden Bedürfnis Rechnung zu tragen.

Das gesetzte Ziel wird erfindungsgemäß dadurch erreicht, dass das Endglied der Schubkette unter Bildung einer Kolbenstange direkt mit dem Kolben der Antriebseinheit verbunden ist und dass das das Antriebsrad oder Antriebsritzel beherbergende Gehäuse und der dem Gehäuse zugewandte Teil des Zylinders einen gemeinsamen mit Druckluft beaufschlagbaren Druckraum bilden.

Die erfindungsgemäße Gleitschutzvorrichtung bietet den Vorteil, dass sich die Baulänge des das Antriebsrad bzw. Antriebsritzel aufnehmenden Gehäuses auf einen Bruchteil der Baulänge des Druckluftzylinders bzw. des Kolbenhubes reduzieren lässt. Voraussetzung für die Realisierung der beanspruchten Lösung war die Aufgabe des Prinzips einer klaren Trennung der aus einem in einem Zylinder geführten Kolben gebildeten Antriebseinheit von dem jeweils anzutreibenden Aggregat, wie es sowohl bei Normzylindern, Serienzylindern und Sonderzylindern seit eh und je praktiziert wird (vgl. Ebertshäuser/Helduser, Fluidtechnik von A bis Z, 2. Aufl., S. 177). Die an sich bekannte Schubkette ersetzt, mit anderen Worten, anders als bei der Gleitschutzvorrichtung bei der EP 1 049 591 B1 nicht eine Kettenschlaufe, sondern sie erfüllt gewissermaßen die Funktion einer als flexible Kolbenstange ausgebildeten Zahnstange.

Weitere Einzelheiten der Erfindung ergeben sich aus der nachstehenden Beschreibung einer in den beigefügten Zeichnungen dargestellten besonders vorteilhaften Ausführungsform der Erfindung und aus den Unteransprüchen.

### Kurze Beschreibung der Zeichnungen

Es zeigen:
- Fig. 1: stark schematisiert die wesentlichen Teile einer erfindungsgemäßen Gleitschutzvorrichtung in der Betriebsstellung,
- Fig. 2: in vergrößertem Maßstab eine Seitenansicht der Antriebseinheit der Vorrichtung gemäß Figur 1,
- Fig. 3: einen Schnitt längs der Linie III - III in Figur 2,
- Fig. 4: eine der Figur 2 entsprechende Seitenansicht,
- Fig. 5: einen Schnitt längs der Linie V - V in Figur 4,

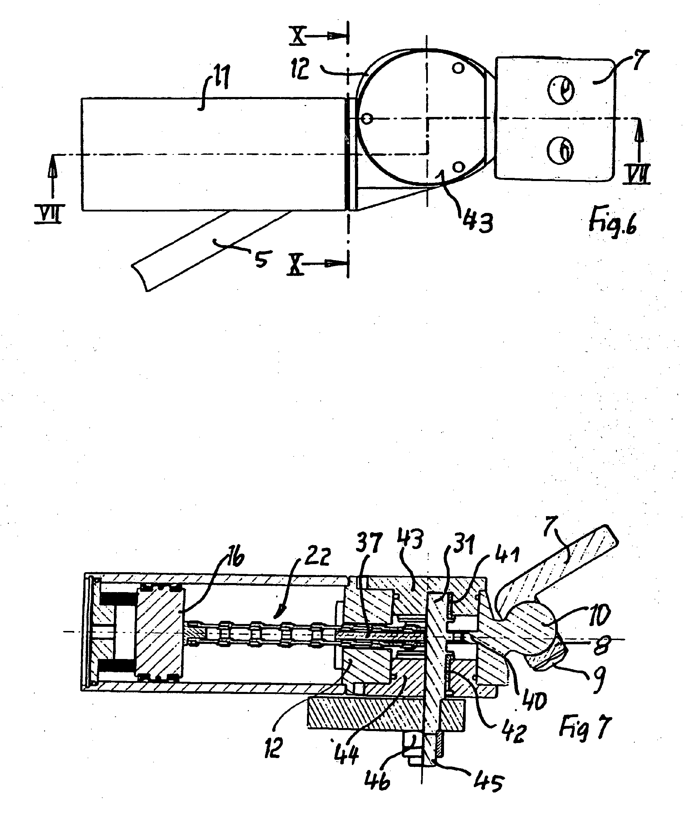

- Fig. 6: eine Draufsicht auf die Antriebseinheit gemäß Fig. 2 bis 4,
- Fig. 7: eine Schnitt längs der Linie VII - VII in Figur 6,
- Fig. 8: eine der Figur 6 entsprechende Draufsicht,
- Fig. 9: einen Schnitt längs der Linie IX - IX in Figur 8 und
- Fig. 10: in stark vergrößertem Maßstab einen Teilschnitt längs der Linie X - X in Figur 6.

### Wege zur Ausführung der Erfindung

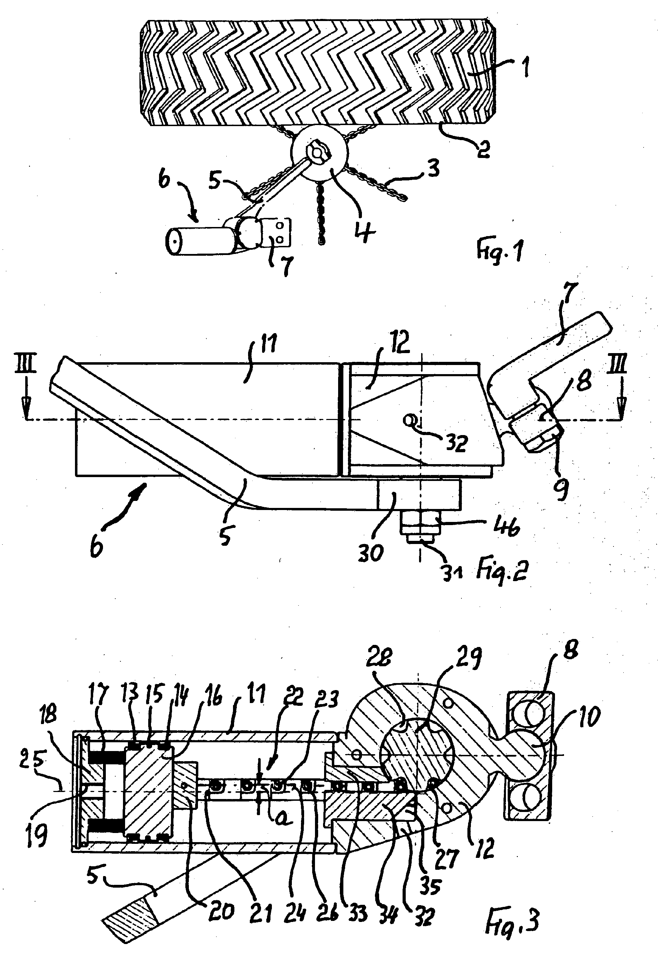

In Figur 1 ist 1 ein Fahrzeugrad, gegen dessen Flanke 2 zwecks Einleitung einer Rotationsbewegung ein mit Schleuderketten 3 versehener Drehteller 4 gedrückt wird. Der Drehteller 4 ist am freien Ende eines schwenkbaren Auslegerarmes 5 gelagert, in den durch eine Antriebseinheit 6 eine Hin- und Herbewegung einleitbar ist. Zur Befestigung der Antriebseinheit 6 am Fahrzeug dient ein Befestigungsflansch 7, der in einer gewünschten Position mit Hilfe eines Querträgers 8 und zweier Klemmschrauben 9 auf einem Kugelkopf 10 festklemmbar ist, wobei sowohl der Befestigungsflansch 7 als auch der Querträger 8 mit an die Form des Kugelkopfes 10 angepassten, teilkugelförmigen Pfannen versehen sind.

Die Antriebseinheit 6 weist einen Zylinder 11 und ein sich an dessen eines Ende anschließendes, im Wesentlichen zylindrisches Gehäuse 12 auf. Im Zylinder 11 ist hin- und herbewegbar ein an seinem Umfang mit zwei flexiblen Dichtmanschetten 13, 14 und einem vergleichsweise breiten Kolbenring 15 versehener Kolben 16 gelagert. Der Kolben 16 liegt in einer Endstellung gegen einen elastischen Stützring 17 an. Um den Kolben 16 auf seiner dem Stützring 17 zugewandten Seite mit einem vorzugsweise von Druckluft gebildeten Druckmedium beaufschlagen zu können, ist ein den Stützring 17 tragender Abschlussdeckel 18 des Zylinders 11 mit einer Bohrung 19 für den Anschluss einer nicht dargestellte Druckluftleitung versehen.

Auf seiner dem Abschlussdeckel 18 abgewandten Seite weist der Kolben 16 einen Anschlusssteg 20 für das Endglied 21 einer Schubkette 22 auf, wobei der Anschlusspunkt so gewählt ist, dass die durch die Zentren der die Glieder der Schubkette 22 miteinander verbindenden Gelenkbolzen 23 verlaufende Linie 24 gegenüber der zentralen Achse 25 des Zylinders 11 und des Kolbens 16 um einen Betrag a versetzt angeordnet ist, um eine mittige Belastung des Kolbens 16 zu gewährleisten. Der nicht als Gelenk genutzte, wie alle Gelenkbolzen 23 mit einer drehbaren Hülse 26 umgebene Gelenkbolzen 23 des Frontgliedes 27 der Schubkette 22 greift in eine der Zahnlücken 28 eines Antriebsritzels 29, das ein Stück mit einer aus dem Gehäuse 12 ragenden, vom Ende 30 des Auslegerarmes 5 umfassten Welle 31 bildet.

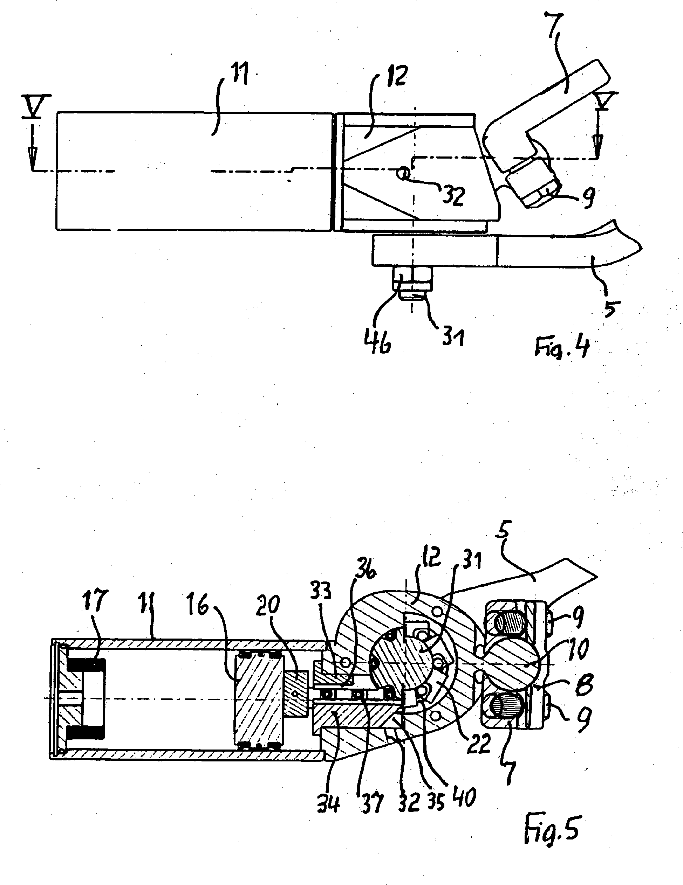

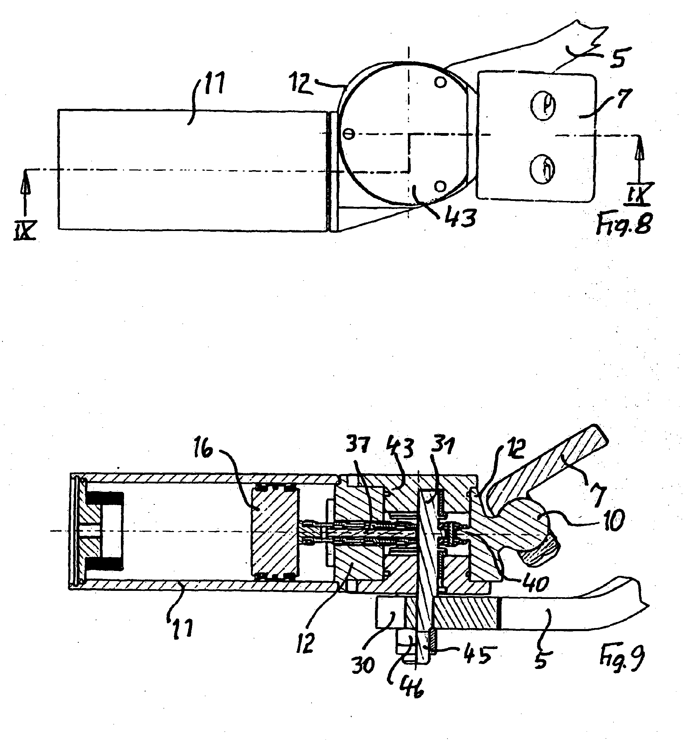

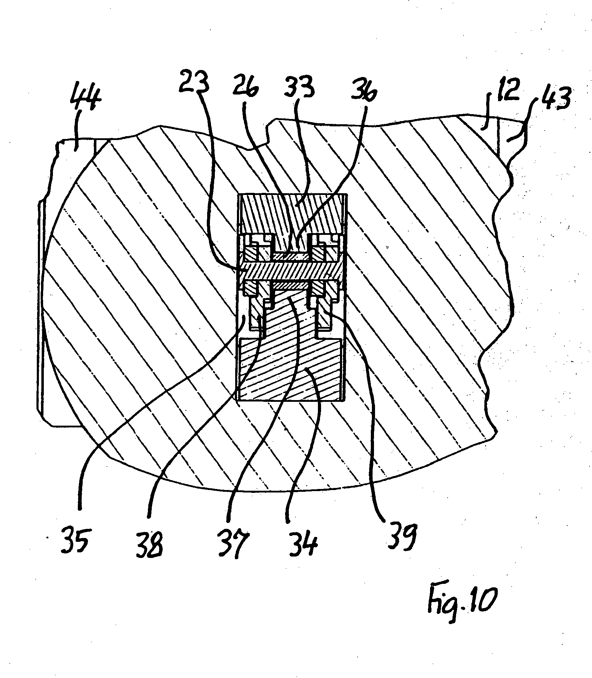

Um die dem Stützring 17 abgewandte Seite des Kolbens 16 mit einem Druckmedium beaufschlagen zu können, ist das Gehäuse 12 mit einer Bohrung 32 versehen, an die eine weitere nicht dargestellte Druckmittelleitung anschließbar ist. Der Innenraum des Gehäuses 12 und der dem Gehäuse 12 zugewandte Raum des Zylinders 11 sind über einen mit Führungseinsätzen 33 und 34 für die Schubkette 12 versehenen Kanal 35 miteinander verbunden und bilden somit einen gemeinsamen Druckraum. Die Führungseinsätze 33 und 34 weisen - wie aus Figur 5 erkennbar-Führungsstege 36, 37 auf, die zwischen die durch die Gelenkbolzen 23 miteinander verbunden, parallelen Wangen 38, 39 der Glieder der Schubkette 22 ragen, wobei die den Führungsstegen 36, 37 zugewandten Abschnitte der Wangen 38, 39 Führungskanäle für die Führungsstege 36, 37 bilden (vgl. Figur 10). An den Führungssteg 37 schließt sich ein von einem in das Innere des Gehäuses 12 ragenden, ringförmigen Vorsprung der Gehäusewand gebildeter Führungssteg 40 an, so dass die Schubkette 22 in der in den Figuren 5 und 9 dargestellten, annähernd einer Endposition entsprechenden Position praktisch auf ihrer gesamten Länge geführt ist und insbesondere ihre Gelenkbolzen 23 bzw. Hülsen 26 sicher in den Zahnlücken 28 des Antriebsritzels 29 gehalten werden, wenn die Schubkette 22 auf Druck beansprucht wird. Der Hub des Kolbens 16 und die Zähnezahl des Antriebsritzels 29 sind so aufeinander abgestimmt, dass die Schubkette 22 das Antriebsritzel 29 in einer der Endstellungen des Kolbens praktisch voll umschließt. Da sich ein Teil der Zähne der Schubkette 22 in der Endstellung des Kolbens 16 im Bereich der Führungsstege 36, 37 befindet, muss die Zahl der Glieder der Schubkette 22 größer sein als die Zähnezahl des Antriebsritzels 29.

Die Welle 31 des Antriebsritzels 29 ist in Gleitlagern 41, 42 zweier das Gehäuse 12 verschließender Deckel 43, 44 gelagert. Zur Befestigung des Auslegerarmes 5 auf der Welle 31 dienen ein Gewindezapfen 45 und eine Befestigungsmutter 46.

## Patentansprüche

1. Gleitschutzvorrichtung mit mehreren an einem drehbaren Halter befestigten Kettensträngen (3), deren dem Halter abgewandte Abschnitte in der Betriebsstellung vom sich drehenden Halter unter Fliehkrafteinwirkung in den Bereich der Bodenberührungsfläche eines rotierenden Fahrzeugrades geschleudert werden, mit einem Schwenkaggregat für einen den Halter tragenden Auslegerarm (5) und mit Mitteln zum Einleiten gegenläufiger Schwenkbewegungen in das Schwenkaggregat, durch die der Auslegerarm (5) aus einer Ruhestellung in seine Betriebsstellung und zurück bewegbar ist, wobei die Mittel zum Einleiten der Schwenkbewegungen in das Schwenkaggregat von einer Antriebseinheit (6) mit einem in einem Druckluftzylinder (11) geführten Kolben (16) gebildet werden, durch die unter Zwischenschaltung eines von einer ein Frontglied (27) und ein Endglied (21) aufweisenden Schubkette (22) gebildeten Übertragungselementes Schwenkbewegungen in ein mit dem Frontglied (27) verbundenes Antriebsrad oder Antriebsritzel (29) einleitbar sind, dessen in einem Gehäuse (12) gelagerte Welle (31) den Auslegerarm (5) für den Halter trägt, **dadurch gekennzeichnet, dass** das Endglied der Schubkette (22) unter Bildung einer Kolbenstange direkt mit dem Kolben (16) der Antriebseinheit (6) verbunden ist und dass das das Antriebsrad oder Antriebsritzel (29) beherbergende Gehäuse (12) und der dem Gehäuse (12) zugewandte Teil des Zylinders (11) einen gemeinsamen mit Druckluft beaufschlagbaren Druckraum bilden.

2. Gleitschutzvorrichtung nach Anspruch 1, **dadurch gekennzeichnet, dass** das Frontglied (27) der Schubkette (22) in einer Endstellung des Kolbens (16) mit einem seine parallel zueinander angeordneten Gliedwangen (38; 39) miteinander verbindenden Gelenkbolzen (23) in eine Zahnlücke (28) des Antriebsritzels (29) greift.

3. Gleitschutzvorrichtung nach Anspruch 2, **dadurch gekennzeichnet, dass** die Zähnezahl des Antriebsritzels (29) kleiner als die Zahl der Glieder der Schubkette (22) ist.

4. Gleitschutzvorrichtung nach einen der Ansprüche 1 bis 3, **dadurch gekennzeichnet, dass** das das Antriebsritzel (29) und dessen Welle (31) beherbergende Gehäuse (12) über einen einen Durchlass für die Schubkette (22) bildenden Kanal (35) mit dem Zylinder (11) in Verbindung steht.

5. Gleitschutzvorrichtung nach einen der Ansprüche 1 bis 4, **dadurch gekennzeichnet, dass** das das Antriebsritzel (29) und dessen Welle (31) beherbergende Gehäuse (12) mit Führungseinsätzen (33; 34) für die Schubkette (22) versehen ist.

6. Gleitschutzvorrichtung nach Anspruch 5, **dadurch gekennzeichnet, dass** eine weitere Führung von einem den Kopfkreis der Zähne des Antriebsritzels (29) auf einem Teil seines Umfangs mit geringem Spiel umschliessenden, ringförmigen Führungssteg (40) gebildet wird.

7. Gleitschutzvorrichtung nach Anspruch 6, **dadurch gekennzeichnet, dass** der Führungssteg (40) sich über etwa 270° des Kopfkreises der Zähne des Antriebsritzels (29) erstreckt.

8. Gleitschutzvorrichtung nach einen der Ansprüche 5 bis 7, **dadurch gekennzeichnet, dass** die Führungseinsätze (33; 34) als Geradführung ausgebildete Führungsstege (36; 37) aufweisen, welche die die Glieder der Schubkette (22) miteinander verbindenden Gelenkbolzen (23) tangential in den Bereich des Teilkreises der Zähne des Antriebsritzels (29) überführen.

9. Gleitschutzvorrichtung nach einem der Ansprüche 1 bis 8, **dadurch gekennzeichnet, dass** die Achsen der die Glieder der Schubkette (22) miteinander verbindenden Gelenkbolzen (23) auf einer Geraden (24) liegen, die gegenüber der zentralen Längsachse (25) des Kolbens (16) um einen Betrag (a) versetzt angeordnet ist.

10. Gleitschutzvorrichtung nach einem der Ansprüche 1 bis 9, **dadurch gekennzeichnet, dass** auf den Gelenkbolzen (23) der Schubkette (22) drehbare Hülsen (26) gelagert sind.

## Claims

1. Anti-skid device with several lengths of chain (3) fixed to a rotary holder, the portions of the lengths of chain facing away from the holder in the operating position being thrown from the rotating holder under centrifugal action to the area of the ground-contacting surface of a rotating vehicle wheel, with a pivoting unit for an extension arm (5) bearing the holder and with means for applying opposed pivoting movements to the pivoting unit by which means the extension arm (5) can be moved from a rest position into its operating position and back, wherein the means for applying the pivoting movements to the pivoting unit are formed by a drive unit (6) with a piston (16) guided in a pneumatic cylinder (11), by which drive unit (6), with an interposed transmission element formed by a thrust chain (22) comprising a front link (21) and an end link (27), pivoting movements can be applied to a drive wheel or drive pinion (29) connected to the front link (21), whose shaft (31) which is held in a housing (12) bears the extension arm (5) for the holder, **characterized in that** the end link of the thrust chain (22) is directly connected to the piston (16) of the drive unit (6), thus forming a piston rod, and that the housing (12) accommodating the drive wheel or drive pinion (29) and the part of the cylinder (11) facing the housing (12) form a common pressure space to which compressed air can be admitted.

2. Anti-skid device according to claim 1, **characterized in that** the front link (27) of the thrust chain (22) engages with a spacewidth (28) of the drive pinion (29) in an end position of the piston (16) with one of its hinge pins (23) interconnecting its link flanks (38, 39) arranged in parallel one to another.

3. Anti-skid device according to claim 2, **characterized in that** the number of teeth of the drive pinion (29) is lower than the number of links of the thrust chain (22).

4. Anti-skid device according to one of claims 1 to 3, **characterized in that** the housing (12) accommodating the drive pinion (29) and the shaft (31) thereof is in communication with the cylinder (11) via a channel (35) forming a passage for the thrust chain (22).

5. Anti-skid device according to one of claims 1 to 4, **characterized in that** the housing (12) accommodating the drive pinion (29) and the shaft (31) thereof is provided with guide insets (33, 34) for the thrust chain (22).

6. Anti-skid device according to claim 5, **characterized in that** a further guide is formed by an annular guide web (40) enclosing the tip circle of the teeth of the drive pinion (29) on a part of its circumference with little clearance.

7. Anti-skid device according to claim 6, **characterized in that** the guide web (40) extends over approximately 270° of the tip circle of the teeth of the drive pinion (29).

8. Anti-skid device according to one of claims 5 to 7, **characterized in that** the guide insets (33, 34) comprise guide webs (36, 37) formed as straight-line guidance which transfer the hinge pins (23) interconnecting the links of the thrust chain (22) tangentially into the area of the reference circle of the teeth of the drive pinion (29).

9. Anti-skid device according to one of claims 1 to 8, **characterized in that** the axes of the hinge pins (23) interconnecting the links of the thrust chain (22) are located on a straight line (24) which is arranged to be offset by an amount (a) with respect to the central longitudinal axis (25) of the piston (16).

10. Anti-skid device according to one of claims 1 to 9, **characterized in that** rotary sleeves (26) are held on the hinge pins (23) of the thrust chain (22).

## Revendications

1. Dispositif antidérapant ou d'adhérence comprenant plusieurs brins de chaîne (3) fixés à un support rotatif et dont les tronçons éloignés du support sont, dans la position de fonctionnement, projetés par le support en rotation et sous l'effet de la force centrifuge, dans la zone de la surface de contact au sol d'une roue de véhicule en rotation, le dispositif comprenant également un groupe de pivotement pour un bras de potence (5) portant le support, ainsi que des moyens pour produire des mouvements de pivotement opposés dans le groupe de pivotement, par lesquels le bras de potence (5) peut être déplacé d'une position de repos à sa position de fonctionnement et inversement, dispositif
dans lequel les moyens pour produire les mouvements de pivotement dans le groupe de pivotement sont formés par une unité d'entraînement (6) avec un piston (16) guidé dans un cylindre pneumatique (11), par l'intermédiaire de laquelle il est possible de produire, avec interposition d'un élément de transmission formé par une chaîne de poussée (22) présentant un maillon frontal avant (27) et un maillon terminal (21), des mouvements de pivotement dans une roue d'entraînement ou un pignon d'entraînement (29) relié au maillon frontal avant (27) et dont l'arbre (31) monté dans un carter (12), porte le bras de potence (5) pour le support,
**caractérisé**
**en ce que** le maillon terminal de la chaîne de poussée (22) est relié directement au piston (16) de l'unité d'entraînement (6) en formant une tige de piston, et en ce que le carter (12) logeant la roue d'entraînement ou le pignon d'entraînement (29), et la partie du cylindre (11) dirigée vers le carter (12), forment une chambre de pression commune pouvant être alimentée en air comprimé.

2. Dispositif antidérapant ou d'adhérence selon la revendication 1, **caractérisé en ce que** dans une position extrême du piston (16), le maillon frontal avant (27) de la chaîne de poussée (22) s'engage, avec un tourillon d'articulation (23) reliant ses joues latérales de maillon (38; 39) agencées parallèlement l'une à l'autre, dans un intervalle de dents (28) du pignon d'entraînement (29).

3. Dispositif antidérapant ou d'adhérence selon la revendication 2, **caractérisé en ce que** le nombre de dents du pignon d'entraînement (29) est inférieur au nombre des maillons de la chaîne de poussée (22).

4. Dispositif antidérapant ou d'adhérence selon l'une des revendications 1 à 3, **caractérisé en ce que** le carter (12) logeant le pignon d'entraînement (29) et son arbre (31) est en liaison avec le cylindre (1), par l'intermédiaire d'un canal (35) formant un passage pour la chaîne de poussée (22).

5. Dispositif antidérapant ou d'adhérence selon l'une des revendications 1 à 4, **caractérisé en ce que** le carter (12) logeant le pignon d'entraînement (29) et son arbre (31) est muni d'inserts de guidage (33; 34) pour la chaîne de poussée (22).

6. Dispositif antidérapant ou d'adhérence selon la revendication 5, **caractérisé en ce qu'**un guidage supplémentaire est formé par une nervure de guidage (40) de forme annulaire, qui entoure avec un faible jeu, le cercle de tête des dents du pignon d'entraînement (29) sur une partie de sa périphérie.

7. Dispositif antidérapant ou d'adhérence selon la revendication 6, **caractérisé en ce que** la nervure de guidage (40) s'étend sur environ 270° du cercle de tête des dents du pignon d'entraînement (29).

8. Dispositif antidérapant ou d'adhérence selon l'une des revendications 5 à 7, **caractérisé en ce que** les inserts de guidage (33; 34) présentent des nervures de guidage (36; 37) réalisés sous forme de guidage rectiligne, et qui transfèrent les tourillons d'articulation (23) reliant mutuellement les maillons de la chaîne de poussée (22), tangentiellement dans la zone du cercle primitif des dents du pignon d'entraînement (29).

9. Dispositif antidérapant ou d'adhérence selon l'une des revendications 1 à 8, **caractérisé en ce que** les axes des tourillons d'articulation (23) reliant mutuellement les maillons de la chaîne de poussée (22), se situent sur une droite (24), qui est agencée avec un déport (a) par rapport à l'axe longitudinal central (25) du piston (16).

10. Dispositif antidérapant ou d'adhérence selon l'une des revendications 1 à 9, **caractérisé en ce que** sur les tourillons d'articulation (23) de la chaîne de poussée (22) sont montées des douilles (26) rotatives.
